# EUROPEAN PATENT APPLICATION

(11) **EP 2 199 350 A1**
(43) Date of publication of application: **23.06.2010**
(21) Application number: 08171844.7
(22) Date of filing: 16.12.2008
(51) Int. Cl.: C09D 7/14, C09D 17/00, B05D 5/06, G01J 3/46

(54) **Tailor-made metallic effect pigment modules**

(71) Applicant: Akzo Nobel Coatings International B.V., 6824 BM Arnhem (NL)
(72) Inventor: Kirchner, Eric Jacob Jan, 2318 TG, LEIDEN (NL); Gottenbos, Roelof Johannes Baptist, 2353 KG, LEIDERDORP (NL)
(74) Representative: Schalkwijk, Pieter Cornelis

(57) **Abstract**

The invention relates to a process of preparing a metallic effect paint matching the visual appearance of an existing metallic effect coating having hiding properties and texture properties, wherein the process comprises selecting at least two paint modules from a number of existing paint modules and mixing the selected paint modules, wherein the existing paint modules comprise metallic effect modules comprising metallic effect pigments, **characterized in that** the metallic effect modules comprise
a) at least one hiding module comprising metallic effect pigments having an average particle diameter of at most 10 µm, and
b) at least one texture module comprising metallic effect pigments having a 95th percentile value of the particle diameter distribution of at least 25 µm,

and wherein the hiding properties of the metallic effect paint are matched to the existing metallic effect coating by selecting the required amount of the hiding module, and the texture properties of the metallic effect paint are matched to the existing metallic effect coating by selecting the required amount of the texture module.

## Description

The invention relates to a process of preparing a metallic effect paint matching the visual appearance of an existing metallic effect coating having hiding properties and texture properties, wherein the process comprises selecting at least two paint modules from a number of existing paint modules and mixing the selected paint modules, wherein the existing paint modules comprise metallic effect modules comprising metallic effect pigments. The invention further relates to a kit of parts for preparing a metallic effect paint matching the visual appearance of an existing metallic effect coating.

A process of the above-mentioned type is generally known and for example described in International patent application WO 2006/030028.

It should be noted that International patent application WO 2005/111152 describes adding a metallic toner to an effect pigment in order to improve its hiding properties.

It is also known, for example from the textbook Lehrbuch der Lacke und Beschichtungen Band 6 (Hirzel Verlag, Stuttgart, 2008) p. 473, that adding a fine grade of metallic pigment to a coarse grade of metallic pigment improves the hiding power.

Repairing painted surfaces requires that the repair paint matches the visual appearance of the originally applied paint film. To this end, the colour of the original paint film is measured and subsequently a paint composition is determined which has substantially the same colour within a predetermined tolerance. This can be done by searching a suitable paint composition in a database or a suitable paint composition can be calculated based on the colorimetric data of the paint components.

To allow easy formulation of matching paints in any colour, modular systems are often used. Paint modules are compositions of base colours comprising all ingredients which make up a complete paint. These modules can be mixed to obtain a paint of a colour which, after being applied and dried as a paint film, matches the colour of the paint originally coating the substrate. Alternatively, paint compositions can be formulated on the basis of other types of paint modules, such as pigment concentrates, binder modules, effect modules, components comprising flop-controllers, etc.

Besides colour, a paint film shows numerous further visual properties. Particularly when metallic effect pigments, such as for example aluminium flake pigments, are used, the look of a paint film is not of a uniform colour, but shows texture. This can include phenomena such as coarseness, glints, micro-brilliance, cloudiness, mottle, speckle, sparkle, and glitter. In the following, texture is defined as the visible surface structure in the plane of the paint film depending on the size and organization of small constituent parts of a material. In this context, texture does not include roughness of the paint film but only the visual irregularities in the plane of the paint film. Structures smaller than the resolution of the human eye contribute to colour, whereas larger structures generally also contribute to texture.

A drawback of the known method is that variation of the proportion of a specific metallic effect module in the recipe will influence both the hiding properties and the texture properties of the resulting metallic effect paint. This makes matching of metallic effect paints expensive and time-consuming. It also detracts from the stability of colour formula optimization algorithms in colour matching software. Furthermore, because known metallic effect modules influence hiding and texture properties, a higher number, typically 5 to 7, of metallic effect modules is required to match essentially all possible metallic effect coatings normally encountered in an automobile refinish workshop.

There is a need to make matching of metallic effect paints less expensive and less time-consuming, and to increase the stability and reliability of colour formula optimization algorithms in colour matching software. It is also desirable to reduce the number of metallic effect modules required to match essentially all possible metallic effect coatings normally encountered in an automobile refinish workshop.

We have now found a process of preparing a metallic effect paint matching the visual appearance of an existing metallic effect coating having hiding properties and texture properties, wherein the process comprises selecting at least two paint modules from a number of existing paint modules and mixing the selected paint modules, wherein the existing paint modules comprise metallic effect modules comprising metallic effect pigments, **characterized in that** the metallic effect modules comprise
a) at least one hiding module comprising metallic effect pigments having an average particle diameter of at most 10 µm, and
b) at least one texture module comprising metallic effect pigments having a 95th percentile value of the particle diameter distribution of at least 25 µm,
and wherein the hiding properties of the metallic effect paint are matched to the existing metallic effect coating by selecting the required amount of the hiding module, and the texture properties of the metallic effect paint are matched to the existing metallic effect coating by selecting the required amount of the texture module.

Using the process of the invention, a paint formulator can first adjust the hiding properties of the matching metallic effect paint by adding the hiding module to the colour formula. In the next stage, the paint formulator can add the texture module to the formula, without having to fear that the hiding properties of the matching metallic effect paint will become less optimal.

When searching for a colour match in a computer implemented process, in the first step of the matching process the colour matching software can adjust the hiding properties of a candidate colour formula, such that good hiding properties are obtained. In the next step of the matching process, the software can choose the right texture module such that a good texture match is obtained, without running the risk that the hiding properties of the repair paint become worse. By independently optimizing hiding and texture properties, a more efficient procedure for obtaining a good colour and texture match with good hiding quality is obtained.

Alternatively, when searching for a colour match, in the first stage of the matching process the paint formulator or software can first select the right texture module such that a good colour and texture match is obtained, without having to ensure good hiding properties of the repair paint at this stage. In the next stage of the matching process, the hiding module can be added to the colour formulation, in order to ensure good hiding properties of the repair paint without having to fear that the quality of the colour and texture match will become worse. In this way, many cases will be avoided where later in the colour matching process a different metallic effect toner needs to be chosen. Therefore, the colour matching process will become more efficient, and colour matching software will be able to run in a more modular way and therefore become more stable.

With the process of the invention, it is less expensive and less time-consuming to make matching metallic effect paints.

The process also increases the stability and reliability of colour formula optimization algorithms in colour matching software.

It is possible to reduce the number of metallic effect modules required to match essentially all possible metallic effect coatings normally encountered in an automobile refinish workshop. This may lead to reductions in costs for logistics, or leave space for other modules that may help to avoid other problems.

Further advantages of the present invention are described below.

It is potentially easier to implement changes in raw material specifications. Products or raw materials may sometimes require upgrades or other changes. For example, when a supplier of metallic pigment changes the specifications of the product, a different metallic pigment needs to be used. The selection of the new metallic pigment becomes easier when the metallic pigments are chosen on the basis of well-defined criteria according to the present invention. A one-by-one replacement ("drop-in") is facilitated if the choice of metallic pigment is based on a single criterion, i.e. hiding or texture, rather than on both hiding and texture.

Using the present invention makes it easier to formulate multilayer coatings. These coatings are applied on a coloured substrate such as a coloured primer or a coloured first base coat layer. On top of that, a coloured base coat is applied that is not in itself hiding. Currently, in many cases it is difficult to formulate a coloured basecoat that is not hiding, because the metallic toner necessary to obtain a certain texture already makes the whole base coat hiding. When using the present invention, it will be easier to formulate base coats that are non-hiding, simply by not adding too much hiding module. In this way, multilayer coatings will be formulated more efficiently and at reduced cost. And since multilayer coatings expand the colour space that can be formulated with a car refinish product, the present invention makes it possible to match colours that could not be matched or could only be matched with difficulty previously.

Using prior art technology, examples of colours can be formulated with the current range of metallic effect modules, but only when allowing these formulations to be non-hiding. With current technology these formulations can only be made to be hiding by making the texture match worse. With the present invention, such formulations can be made to be hiding just by adding hiding module to the formulation.

Both the hiding module and the texture module suitably have a narrow particle diameter distribution.

The percentile is the value of the particle diameter below which a certain percent of particles fall. For example, the 90th percentile value of the particle diameter distribution is the particle diameter value below which 90 percent of the particle diameters fall.

In one embodiment, the average particle diameter of the hiding module is at most 8 µm. In another embodiment, the 90th percentile value of the particle diameter distribution of the hiding module is at most 25 µm, or at most 20 µm. Alternatively, the median of the particle diameter is at most 10 µm, or at most 8 µm.

The particle diameter distribution curve of the texture module advantageously has a narrow tail towards smaller particle diameters. Suitably, the 95th percentile value of the particle diameter distribution of the metallic effect pigments of the texture module is at least 25 µm, or at least 30 µm. Alternatively, the 90th percentile value of the particle diameter distribution is at least 20 µm, or at least 25 µm. Alternatively, the median of the particle diameter is greater than 5 µm, or greater than 8 µm.

Alternatively, the average of the particle diameter is greater than 5 µm, or greater than 8 µm.

The required particle diameters and particle diameter distributions can for example be obtained by sieving processes wherein mixtures of metal pigment particles having different particle diameters are separated into particle diameter fractions.

In order to match the full spectrum of possible metallic effect coatings normally encountered in an automobile refinish workshop even better, the metallic effect modules of the invention suitably comprise two different texture modules. For example, the first texture module may comprise metallic effect pigments of the so-called cornflake type, where the metallic pigments are corrugated, irregularly shaped planar flakes with relatively rough surface topology. The second texture module may comprise the so-called silver dollar type of metallic effect pigments, where the metallic pigments are circular, planar flakes, with a relatively round shape and relatively smooth surface.

Using a hiding module as described above, a first texture module comprising cornflake-type metallic effect pigments, and a second texture module comprising solver dollar-type metallic effect pigments, it is possible to match the full spectrum of possible metallic effect coatings normally encountered in an automobile refinish workshop with a limited number of metallic effect modules. According to the invention, it is sufficient to have at most 4, for example 3 or 4, different metallic effect modules.

As the invention leads to fewer metallic effect modules being required for matching paint formulations, this may lead to a reduction in costs for logistics, or leave space for other new modules that may help to solve other problems.

The metallic effect pigments used in the hiding module and the texture module may be made of any metal suitable for metallic effect pigments. Aluminium pigments are probably the most common type of metal effect pigments. However, pigments based on iron, stainless steel, bronze, zinc, tin, gold, silver, titanium, nickel, copper, and their alloys can likewise be used in the present invention. It is also possible to use other highly reflective metallic effect pigments, for example those based on plastic coated metal or metal coated plastic. Metallic effect pigments generally consist of thin highly reflective platelets. Since these pigments show a tendency to orient themselves parallel to the coating surface, most of the light reflected by the metallic effect pigments is towards the specular direction, in the sense that the angle of reflectance equals the angle of incidence. To optimize this visual effect, metallic effect pigments frequently have a more or less round shape and a more or less flat surface. The thickness of the flakes is often less than 2 micrometers. The metallic effect pigments may also be surface treated or otherwise modified to obtain specific desired properties, for example stability of the metallic effect pigments in aqueous coating compositions.

For measuring the particle diameter and the diameter distribution of metallic pigments, different methods are generally known and commercially available. A recent overview of such methods can be found for example in the textbook Metallic effect pigments by P. Wiessling, Vincentz Verlag, Hannover, 2006, page 40. Such methods include, but are not restricted to, light diffraction methods, such as the Cilas 715 laser granulometer, microscopic image analysis, such as the Sympatec Qicpic instrument, electronic counting methods, such as the Coulter counter, sedimentation analysis, sieve analysis, and photogrammetry.

The invention further relates to a kit of parts for preparing a metallic effect paint matching the visual appearance of an existing metallic effect coating having hiding properties and coarseness properties comprising
a) at least one hiding module comprising metallic effect pigments having an average particle diameter of at most 10 µm, and
b) at least one texture module comprising metallic effect pigments having a 95th percentile value of the particle diameter distribution of at least 25 µm.

The process and the kit of parts of the invention can be employed with particular advantage in the car refinish industry to prepare metallic effect paints for matching the visual appearance of an existing metallic effect coating of an automobile to be repaired.

## Claims

1. A process of preparing a metallic effect paint matching the visual appearance of an existing metallic effect coating having hiding properties and texture properties, wherein the process comprises selecting at least two paint modules from a number of existing paint modules and mixing the selected paint modules, wherein the existing paint modules comprise metallic effect modules comprising metallic effect pigments, **characterized in that** the metallic effect modules comprise
a) at least one hiding module comprising metallic effect pigments having an average particle diameter of at most 10 µm, and
b) at least one texture module comprising metallic effect pigments having a 95th percentile value of the particle diameter distribution of at least 25 µm,
and wherein the hiding properties of the metallic effect paint are matched to the existing metallic effect coating by selecting the required amount of the hiding module, and the texture properties of the metallic effect paint are matched to the existing metallic effect coating by selecting the required amount of the texture module.

2. The process according to claim 1 wherein the hiding module comprises metallic effect pigments having an average particle diameter of at most 8 µm.

3. The process according claim 1 or 2 wherein the 95th percentile value of the particle diameter distribution of the metallic effect pigments of the texture module is at least 30 µm.

4. The process according to any one of the preceding claims wherein the existing paint modules comprise at most 4 metallic effect modules.

5. The process according any one of the preceding claims wherein the metallic effect modules comprise two different texture modules.

6. The process according to any one of the preceding claims wherein the process is employed to prepare a metallic effect paint for matching the visual appearance of an existing metallic effect coating of an automobile to be repaired.

7. A kit of parts for preparing a metallic effect paint matching the visual appearance of an existing metallic effect coating having hiding properties and texture properties comprising
c) at least one hiding module comprising metallic effect pigments having an average particle diameter of at most 10 µm, and
d) at least one texture module comprising metallic effect pigments having a 95th percentile value of the particle diameter distribution of at least 25 µm .

8. The kit of parts according to claim 7 wherein the hiding module comprises metallic effect pigments having an average particle diameter of at most 8 µm.

9. The kit of parts according to claim 7 or 8 wherein the 95th percentile value of the particle diameter distribution of the metallic effect pigments of the texture module is at least 30 µm.

10. The kit of parts according to any one of preceding claims 7 to 9 wherein the kit of parts comprises at most 4 modules comprising metallic effect pigments.

11. The kit of parts according to any one of preceding claims 7 to 10 wherein the kit of parts comprises two different texture modules.
